# EUROPEAN PATENT SPECIFICATION

(11) **EP 2 513 420 B1**
(45) Date of publication and mention of the grant of the patent: **24.04.2019**
(21) Application number: 10838295.3
(22) Date of filing: 17.12.2010
(51) Int. Cl.: E21B 43/26, C09K 8/68, C09K 8/66

(54) **FRACTURE FLUID COMPOSITIONS COMPRISING A MIXTURE OF MONO AND DIVALENT CATIONS AND THEIR METHODS OF USE IN HYDRAULIC FRACTURING OF SUBTERRANEAN FORMATIONS**
FRAKTURIERUNGSFLÜSSIGKEITSZUSAMMENSETZUNGEN MIT EINER MISCHUNG AUS MONO- UND DIVALENTEN KATIONEN SOWIE VERFAHREN ZU IHRER VERWENDUNG BEI DER HYDRAULISCHEN FRAKTURIERUNG UNTERIRDISCHER FORMATIONEN
COMPOSITIONS DE FLUIDES DE FRACTURATION COMPRENANT UN MÉLANGE DE CATIONS MONOVALENTS ET DIVALENTS ET PROCÉDÉS D'UTILISATION ASSOCIÉS DANS LA FRACTURATION HYDRAULIQUE DE FORMATIONS SOUTERRAINES

(30) Priority: 17.12.2009 US 640562
(43) Date of publication of application: 24.10.2012
(73) Proprietor: Crill, Dick, Snyder, Texas 79549 (US)
(72) Inventor: Crill, Dick, Snyder, Texas 79549 (US)
(74) Representative: Hoeger, Stellrecht & Partner Patentanwälte mbB
(86) International application number: PCT/US2010/061048
(87) International publication number: WO 2011/075653

(56) References cited:
- US-A- 5 036 919
- US-A1- 2003 183 389
- US-A1- 2005 274 523
- US-A1- 2006 014 648
- US-A1- 2006 243 449
- US-A1- 2007 014 639
- US-A1- 2007 111 897
- US-A1- 2008 202 744

## Description

### FIELD OF THE INVENTION

The present invention relates to production of hydrocarbons such as crude oil and natural gas from subterranean formations via wells drilled into the formation. Specifically, the invention relates to fracturing subterranean formations to stimulate production. More specifically, the invention relates to fracture fluid compositions and methods for using them.

### BACKGROUND OF THE INVENTION

It has been known for decades that hydraulic fracture stimulation can improve the productivity of a well in a tight petroleum or gas reservoir, because a long conductive fracture transforms the flow path that petroleum or natural gas must take to enter the wellbore. It is also known that the fractures created close back shut over time and the well stops producing. How long a well produces depends on the composition of the oil bearing formation and the type of fracture fluid used. Oil wells which become non-producing can often be re-fractured and become producing wells again. As much as 70 percent of the oil is often still in the ground when a well becomes non-producing.

It is common practice to stimulate recovery of fluids from subterranean porous formations by fracturing the porous formation to open new pathways for flow to the wellbore. One commonly used technique for fracturing formations is hydrofracturing. In such fracturing operations, a fracturing fluid (or "frac fluid") is hydraulically injected into a wellbore penetrating the subterranean formation and is forced against the formation strata by very high pressure. The formation strata or rock is forced to crack and fracture, and a proppant is placed in the fracture by movement of a viscous-fluid containing proppant into the crack in the rock. The resulting fracture, with proppant in place, provides improved flow of the recoverable fluid, i.e., oil, gas or water, into the wellbore.

Many fracturing fluid materials, therefore, when used in large concentrations, have relatively poor "clean-up" properties, meaning that such fluids undesirably reduce the permeability of the formation and proppant pack after fracturing the formation. Detailed studies of polysaccharide recovery in the field after hydraulic fracturing operations indicate that more than sixty percent of the total mass of polysaccharide pumped during the treatment maybe left in the fracture at the time gas or oil begins to be produced in commercial quantities.

In general, a single fracturing operation in a shallow gas well (such as a coalbed methane well) may use several hundreds of thousands of gallons of water. Slickwater fracs, which are commonly used in shale gas formations, have been known to use up to five million gallons of water to fracture one horizontal well.

In most cases, fresh water is used to fracture wells because it is more effective than using wastewater from other wells. If wastewater is used, the water must be heavily treated with chemicals to kill bacteria that cause corrosion, scaling and other problems. Even freshwater fracturing operations, however, contain numerous chemicals such as biocides, acids, scale inhibitors, friction reducers, surfactants and others, but the names and volumes of the chemicals used on a specific fracturing job are almost never fully disclosed. In general, it is known that many fracturing fluid chemicals are toxic to human and wildlife, and some are known to cause cancer or are endocrine disruptors.

There continues to exist in the well drilling and hydraulic fracturing arts, a need for a fracture fluid that is effective in a variety of soil conditions, and has properties of both an aggregating fluid and a dispersing fluid, but is also non-toxic and not a source of hazardous waste.

The US patent application US 2005/0274523 A1 discloses methods for the treatment of subterranean wells involving injecting a first fracturing fluid into a formation and then injecting at least a second fracturing fluid into the formation in order to create extended conductive channels through a formation. The fracturing fluids can be similar in density, viscosity, pH and the other related characteristics. Alternatively, the fracturing fluids can differ in their density viscosity, and pH, allowing for variations in the conductive channels formed. Propping agents can also be included in one or both of the injected fluids, further enhancing the conductive channels formed.

A brine sealant solution and a one and two-step process for producing an earthen hardpan in a pond or slush pit is described in US 2007/0014639 A1. The process disperses clay in an aqueous solution using monovalent and divalent cations and bentonite clay. The dispersed clay is then used to fill the seepage capillaries. A second aqueous solution of monovalent and divalent cations and a wetting agent is applied and aggregates the clay and creates a hardpan.

The US patent application US 2006/0014648 A1 relates to viscosified treatment fluids used in industrial and oil field operations, and more particularly, to brine-based viscosified treatment fluids comprising xanthan gelling agents, and their use in industrial and oil field operations. In one embodiment, a method of treating a portion of a subterranean formation is provided comprising the steps of: providing a viscosified treatment fluid that comprises a brine and a gelling agent that comprises a clarified xanthan; and treating the portion of the subterranean formation.

The US patent US 5,036,919 A relates to fracturing with multiple fluids to improve fracture conductivity. According to the method set out in this reference conductivity damage is decreased in fracturing a high temperature (greater than 200°F.) well by employing a first fracturing fluid which is substantially stable at the bottom hole static temperature and pumping a second fracturing fluid behind the first fracturing fluid which is less stable at bottom hole static temperature than the first-pumped fracturing fluid.

### BRIEF SUMMARY OF THE INVENTION

The present invention relates to methods of fracturing a subterranean formation penetrated by a well bore as set out in claims 1 and 8.

In accordance with an embodiment, the present invention provides a method of fracturing a subterranean formation penetrated by a well bore, comprising injecting a brine fracturing fluid into the formation which provides the properties of both a dispersing fracture solution and an aggregating fracture solution.

In particular, it was surprisingly found that a brine solution that was originally developed and used for creating hardpans and stabilizing roadways (i.e., a stabilizing solution) was useful as a fracture fluid in well drilling.

It was also surprisingly found that the dispersing properties of the stabilizing solution are able to act as a dispersing fracture fluid in the clay and earthen materials discharged from the pay zone, in the flow-back fluids during drilling. At the same time, aggregating properties of the stabilizing solution also stabilizes the pay zone and allows hydrocarbons to be released. This stabilization property allows the flow of hydrocarbon through the fractures for a significantly longer time than with prior art fluids.

In an embodiment, the present invention provides a method of fracturing a subterranean formation penetrated by a well bore, comprising formulating a fracturing fluid comprising a brine solution having a mixture of monovalent and divalent cations, and pumping the fracturing fluid down the wellbore at a rate and pressure sufficient to initiate or extend a fracture in the formation. In addition, in another embodiment of the method of the present invention, the brine solution used in the method comprises a deliquescent mixture of salts of monovalent and divalent cations, and water.

In another embodiment, the present invention provides a method of fracturing a subterranean formation penetrated by a well bore, comprising: obtaining a first fracturing fluid comprising a brine solution having a mixture of monovalent cations; pumping the first fracturing fluid down the wellbore at a rate and pressure sufficient to initiate or extend a fracture in the formation; obtaining a second fracturing fluid comprising a deliquescent brine solution having a mixture of monovalent and divalent cations; and pumping the second fracturing fluid down the wellbore at a rate and pressure sufficient to initiate or extend a fracture in the formation. It is also understood that the brine fracture fluid used in the methods of the present invention can also comprise one or more additives and proppants.

In a further embodiment, in accordance with present invention, the chemical components of the mixture of monovalent and divalent cations are provided in a dry form. For example, it would be understood by those of skill in the drilling arts, that the site of a well bore could be relatively distant from points of transportation, such as a remote area of land, or offshore. Therefore, the costs for transportation of the brine fracturing fluids used in the methods of the present invention may be reduced by transporting the components that make up the mixture of monovalent and divalent cations, in a dry mixture, rather than in an aqueous or other solution, due to the reduced weight, and then preparing or formulating the fracturing fluids on site. In addition, it is contemplated that depending on the location of the well bore, the costs of the chemical components of the brine fracture fluids themselves may be less expensive in certain locations, or more expensive in others, so that it would be advantageous to one of skill in the art to be able take advantage of these differences when preparing the brine fracture fluids used in the methods of the present invention.

In an embodiment, the methods of the present invention further comprise that the mixture of monovalent and divalent cations are provided separately, as dry individual chemical components, or as a dry mixture of one or more of the components and added to water or another fluid, prior to pumping the fracturing fluid down the wellbore.

### DETAILED DESCRIPTION OF THE INVENTION

The present invention provides a novel method of use of a deliquescent salt solution as a hydraulic fracture fluid suitable for use in well drilling, having the properties of both a dispersing fracture solution, and an aggregating fracture solution.

The composition of the fracture solution useful in the methods of the present invention is based on the brine sealant salt solution (i.e. a stabilizing solution) disclosed in U.S. Patent No. 7,374,371 to Crill.

The fracture formation method of the present invention begins with formulation of a fracturing fluid comprising a brine solution having a mixture of monovalent and divalent cations, and subsequently pumping the fracturing fluid down the wellbore at a rate and pressure sufficient to initiate or extend a fracture in the formation. This method causes a dispersion of clay particles with mixtures of monovalent and divalent cations in a deliquescent brine solution. These cations include sodium, potassium, magnesium, calcium, and similar monovalent and divalent ions. It is important to note that the counter ions, or anions, are not as relevant to the function of the brine fracturing fluid of the present invention. For example, other counter ions, for example, such as acetate, bisulfate, oxide, phosphate, nitrate and sulfate can be used with the mono and divalent cations in the brine fracture fluids used in the methods of the present invention. The deliquescent brine solutions have a density greater than water, and a sufficient monovalent and divalent cation concentration to allow the clay molecules to separate into individual molecules and disperse into solution.

The solution of dispersed clay molecules thus formed has the beneficial property of being able to flow out of the fractures created by the fracturing process.

In an embodiment, the present invention provides a method of fracturing a subterranean formation penetrated by a well bore, comprising formulating a fracturing fluid comprising a brine solution having a mixture of monovalent and divalent cations, and pumping the fracturing fluid down the wellbore at a rate and pressure sufficient to initiate or extend a fracture in the formation. In a further embodiment, the brine solution comprises a deliquescent mixture of salts of monovalent and divalent cations, and water.

In an embodiment, the brine solution used in the present methods comprises the following mineral composition ranges by weight percent: chloride, 20-25; bromide, 0.3-0.55; magnesium, 3.0-5.0; calcium, 0.6-0.8; sodium, 5.0-7.0; potassium, 0.2-0.4; and manganese, 0.01-0.03; per gallon (3.785 L) of solution. In a further embodiment, the brine solution used in accordance the methods of the present invention comprises the following mineral composition by weight percent: chloride, 22.27; bromide, 0.45; magnesium, 3.94; calcium, 0.76; sodium, 6.38; potassium, 0.30; and manganese, 0.02; per gallon (3.785 L) of solution. In accordance with an embodiment, the brine solution of the method of the present invention further comprises by weight percent, a surfactant at 0.0001; per gallon (3.785 L) of solution.

In another embodiment, the brine solution used in the present methods further comprises one or more additives.

In an embodiment, the present method further comprises one or more proppants mixed with a proppant-transporting carrier fluid be injected into the formation to prop the fracture open.

In an embodiment, the present method comprises a method of fracturing a subterranean formation penetrated by a well bore, comprising obtaining a first fracturing fluid comprising a brine solution having a mixture of monovalent cations, pumping the first fracturing fluid down the wellbore at a rate and pressure sufficient to initiate or extend a fracture in the formation obtaining a second fracturing fluid comprising a brine solution having a mixture of monovalent and divalent cations, and pumping the second fracturing fluid down the wellbore at a rate and pressure sufficient to initiate or extend a fracture in the formation. In a further embodiment, the second fracturing fluid comprises a deliquescent mixture of salts of monovalent and divalent cations, and water. In a further embodiment, the brine solution used in the present method comprises the following mineral composition ranges by weight percent: chloride, 20-25; bromide, 0.3-0.55; magnesium, 3.0-5.0; calcium, 0.6-0.8; sodium, 5.0-7.0; potassium, 0.2-0.4; and manganese, 0.01-0.03; per gallon (3.785 L) of solution. In yet another embodiment, the brine solution used in accordance the methods of the present invention comprises the following mineral composition by weight percent: chloride, 22.27; bromide, 0.45; magnesium, 3.94; calcium, 0.76; sodium, 6.38; potassium, 0.30; and manganese, 0.02; per gallon (3.785 L) of solution. In accordance with an embodiment, the brine solution of the method of the present invention further comprises by weight percent, a surfactant at 0.0001 per gallon (3.785 L) of solution.

In another embodiment, the brine solution used in the present methods further comprises one or more additives.

In an embodiment, the present method further comprises one or more proppants mixed with a proppant-transporting carrier fluid be injected into the formation to prop the fracture open.

Fracturing fluids customarily comprise a thickened or gelled aqueous solution which has suspended therein "proppant" particles that are substantially insoluble in the fluids of the formation. Proppant particles carried by the fracturing fluid remain in the fracture created, thus propping open the fracture when the fracturing pressure is released and the well is put into production. In general, proppants are strong particles that are capable of withstanding the high temperatures and pressures associated with a fracture. Early proppants were formed of materials such as sand, glass beads, walnut shells, and aluminum pellets. However, where closure pressures of the fracture exceed a few thousand pounds per square inch, these materials are crushed resulting in a closure of the fracture. In response, proppants having high compressive strength have been designed to resist crushing under high pressure levels experienced in use. While these proppants prove to have sufficient strength to resist crushing they also have high specific gravities of about 2.0 or more, requiring the use of higher viscosity fracturing fluids. The conductivity or crushability of a proppant under specific conditions of stress, temperature, corrosive environment and time is the single most important measure of its quality. The "propped" fracture provides a larger flow channel to the wellbore through which an increased quantity of hydrocarbons can flow, thereby increasing the production rate of a well.

Sintered bauxite or high grade alumina have been used as proppant materials at well depths greater than 6,100 m (20,000 feet), but these high strength proppants have much higher densities than sand and therefore require high viscosity pumping fluids or high pumping rates. Larger pumping equipment is required, and wear rates on fluid carrying equipment is accelerated. In addition, the raw materials used to make the proppant materials are more costly.

Proppants of intermediate density are known, and work well in the intermediate depths and pressures, i.e., 2,133 m to 4,267 m (34,5 Mpa to 68,9 Mpa) (7,000 to 14,000 feet (5,000-10,000 psi)).

Proppant pellets having a specific gravity of less than 3.4 g/cm³ have been made from diaspore clay, bauxite, and/or alumina. Eufala bauxite, a bauxitic-kaolin material, has been used to prepare a proppant with a density of less than 3.0 g/cm³. Also known is a method of making ceramic microspheres for use as proppants from water-soluble salts, mineral compositions or organometallic complexes, and ultrafine bauxite or alumina-containing particles. A low density proppant has been prepared from kaolin clay and amorphous to microcrystalline silica. The raw materials used to make all these intermediate proppants are costly, and a less expensive proppant material is desired.

As used herein, the term "dispersing fracture fluids" are those which include aqueous solutions of monovalent cation salts, such as potassium chloride (KCl) and sodium chloride (NaCl), ammonium chloride (NH₄Cl) and other salts. For example, dispersing fracture fluids may include alkoxylated fatty amines and an alkoxylated quaternary ammonium salt organic sulfates, phosphates, chlorides, fluorides, citrates, acetates, tartrates, hydrogenphosphates or a mixture thereof. Other examples include ammonium sulfate, sodium sulfate, magnesium sulfate, aluminum sulfate, ammonium hydrogen phosphate, sodium hydrogen phosphate, and potassium hydrogen phosphate.

As used herein, the term "aggregating fracture fluids" are those which include aqueous solutions of di and trivalent cation salts, including calcium chloride (CaCl₂), ferric chloride (FeCl₃), magnesium chloride (MgCl₂), and other salts, for example, such as di, and trivalent metal salts of carboxylic acids. Exemplary salts can also include ferric oxalate, ferric ammonium citrate, barium acetate, aluminum lactate, and magnesium formate.

A dispersing fracture solution in the fracture zone will disperse clays and other earthen particles and allow them to be carried by the flow-back fluids out of the hydrocarbon producing fracture zone. This process increases hydrocarbon production when the pay zone is not mostly clay.

In contrast, an aggregating fracture solution, such as CaCl₂, will aggregate and bind clays and other earthen materials. This stabilizes the fracture zone but will eventually clog and occlude the pay zone with the clay particles that are not aggregated by the CaCl₂.

In accordance with the methods of the present invention, the fracturing operation is intended to create fractures that extend from the wellbore into the target oil or gas formations. Injected fluids have been known to travel as far as 3,000 (914 m) feet from the well. Although attempts are made to design fracturing jobs to create an optimum network of fractures in an oil or gas formation, fracture growth is often extremely complex, unpredictable and uncontrollable. Computer models are used to simulate fracture pathways, but the few experiments in which fractures have been exposed through coring or mining have shown that hydraulic fractures can behave much differently than predicted by models.

Clays generally comprise mixtures of aluminum and iron silicates. These silicates are negatively charged in solution. It is known that when positively charged monovalent ions are added to a suspension of clays, such as the addition of Na⁺ or K⁺, the positive charged ions counter the negatively charged clays allowing the molecules of clay to become more water soluble and disperse into solution. The dispersed clay in concentrated brine water allows the clay molecules to separate into individual molecules.

Having the clay molecules dissolved in a high density brine solution allows these dispersed and suspended clay molecules to be dissolved in the fracture fluid of the present invention and flow out of the fractures in the pay zone. While not wanting to be bound by a specific technical theory, it is thought that in the capillary, the aqueous solution of mono and divalent ions can pass through the fractures created by the high pressure in the rock strata.

It has also been surprisingly found that the use of brine solutions having a mixture of monovalent and divalent cations with clay that are deliquescent can achieve permanent opening and stabilization of the fractures in the pay zone.

An embodiment of the composition of brine solution used for a fracture fluid of the present invention is presented in Table 1. The percentages of salts are by weight with the remainder being water.

**TABLE 1**

| Mineral Content | Range of Percentage by weight |
|---|---|
| Chloride | 20-25 |
| Bromide | 0.3-0.55 |
| Magnesium | 3.0-5.0 |
| Calcium | 0.6-0.8 |
| Sodium | 5.0-7.0 |
| Potassium | 0.2-0.4 |
| Manganese | 0.01-0.03 |
| Total salts | 3.0-35.0 |
| Water | (remainder) |

The carrier or fracturing fluid used in the hydraulic fracturing method of the present invention may further contain one or more conventional additives known to the well service industry such as a gelling agent, crosslinking agent, gel breaker, surfactant, biocide, surface tension reducing agent, foaming agent, defoaming agent, demulsifier, non-emulsifier, scale inhibitor, gas hydrate inhibitor, polymer specific enzyme breaker, oxidative breaker, buffer, clay stabilizer, acid, buffer, solvent or a mixture thereof and other well treatment additives known in the art. The addition of such additives to the carrier fluids minimizes the need for additional pumps required to add such materials on the fly.

In an embodiment of the method of the present invention, the deliquescent brine solution comprises a mixture of monovalent and divalent cations may also be used with a proppant. The proppant, or particulates, are suspended in the brine solution having a mixture of monovalent and divalent cations, and introduced into the subterranean formation at a pressure above a fracturing pressure of the subterranean formation. In this embodiment, at least a portion of the particulate material is substantially neutrally buoyant in the carrier fluid. Further, the substantially neutrally buoyant proppant or particulate is used in a sand control method for a wellbore penetrating a subterranean formation and may be introduced into the wellbore in a slurry with the brine solution having a mixture of monovalent and divalent cations. In an embodiment, at least a portion of the individual particles of the particulate material may be substantially neutrally buoyant in the brine solution.

Conventional propped hydraulic fracturing methods, with appropriate adjustments if necessary, as will be apparent to those skilled in the art, are used in the methods of the present invention.

In another embodiment, the fracture stimulation treatment according to the present invention typically begins with a conventional pad stage to generate the fracture, followed by a sequence of stages in which a viscous carrier fluid transports proppant into the fracture as the fracture is propagated. Typically, in this sequence of stages the amount of propping agent is increased, normally stepwise. The pad and carrier fluid can be, and usually are, a gelled aqueous fluid, such as the brine solution having a mixture of monovalent and divalent cations as shown in Table 1, thickened with a viscoelastic surfactant or with a water soluble or dispersible polymer such as guar, hydroxypropylguar or the like. The pad and carrier fluids may contain various additives. Non-limiting examples are fluid loss additives, crosslinking agents, clay control agents, and mobility control agents such as fibers, breakers and the like, provided that the additives do not affect the stability or action of the formation-dissolving fluid.

In accordance with an embodiment, the method of the present invention comprises injection into the formation, a brine solution having a mixture of monovalent and divalent cations may also be used to fracture the formation, followed by injection of a brine solution having a mixture of monovalent and divalent cations and one or more proppants.

Other examples of additives that can be used with the brine fracture fluid in the methods of the present invention include, for example, silicone-based fluids including dimethylsiloxane polymers, also called dimethyl silicone fluids. Other examples include silicone fluid L-530, and L-531 (Union Carbide Corp., 39 Old Ridgebury Rd., Danbury, CT 06817), WACKER® AK 50 SILICONE FLUID (Wacker Chemie AG Hanns-Seidel-Platz 4, 81737 München, Germany), and similar fluids. The silicone drilling fluids are functionally capable of carrying out additional wellbore functions such as those performed by a spotting fluid, packer-fluid, completion fluid, workover fluid and coring fluid. Emulsifers, demulsifiers, surfactants, wetting agents, pH adjusting agents, iron control agents, acids antibacterial agents, corrosion inhibitors, and other auxiliary substances known to those of ordinary skill in the art.

The procedural techniques for pumping fracture fluids down a wellbore to fracture a subterranean formation are well known in the art. The person that designs such fracturing treatments is the person of ordinary skill to whom this disclosure is directed. That person has available many useful tools to help design and implement the fracturing treatments, one of which is a computer program commonly referred to as a fracture simulation model (also known as fracture models, fracture simulators, and fracture placement models). Most, if not all, commercial service companies that provide fracturing services to the oilfield have one, or more, fracture simulation models that their treatment designers use. One commercial fracture simulation model that is widely used by several service companies is known as FracCADE.TM. This commercial computer program is a fracture design, prediction, and treatment-monitoring program designed by Schlumberger, Ltd. All of the various fracture simulation models use information available to the treatment designer concerning the formation to be treated and the various treatment fluids (and additives and proppants) in the calculations, and the program output is a pumping schedule that is used to pump the fracture stimulation fluids into the wellbore. The text "Reservoir Stimulation," Third Edition, Edited by Michael J. Economides and Kenneth G. Nolte, Published by John Wiley & Sons, (2000), is an excellent reference book for fracturing and other well treatments; it discusses fracture simulation models in Chapter 5 (page 5-28) and the Appendix for Chapter 5 (page A-15).

In an embodiment of the methods of the present invention, the initial fluid pumped into the well bore to create the initial fracture geometry is a deliquescent brine solution having a mixture of monovalent and divalent cations, followed by a proppant-transporting carrier fluid in the later stages. In an embodiment, the proppant-transporting carrier fluid is a conventional polymer-viscosified aqueous fluid.

In another embodiment, the proppant-transporting carrier can be any of the brine solutions of the present invention. In a further embodiment, the proppant-transporting carrier can be a polymer-viscosified aqueous brine solution of the present invention or combinations thereof. Each is injected at pressures and rates sufficient to generate and propagate fractures.

By non-limiting example, the viscous formation dissolving fluid in the initial stage may be a brine solution as described in Table 1. The viscosity of such a system depends upon such factors as the surfactant concentration, the environment (such as the pH and the nature and concentration of salts), the time, the temperature, and the presence of other components such as alcohols, co-surfactants and breakers. The reactivity of such a system depends upon some of the same factors as well as on the nature and concentration of the formation-dissolving component. The nature of these dependencies are known, and thus the relative rates at which this carrier fluid loses viscosity, leakoff into the faces of the fracture and reacts with the formation are adjusted, and taking into account the flow rate necessary to maintain the needed pressure to maintain the hydraulic fracture open.

In accordance with an embodiment, the brine fracture fluid of the present invention is pumped into the wellbore and so into the formation of interest at a pressure that exceeds the fracture initiation pressure of the formation. Once the required volume of brine solution has been injected into the formation, the pumps are shut down and the hydraulic fracture allowed close. Next, the hydraulic fracture has closed (BHP fallen below closure pressure) the well is produced to flow back the spent treating fluids.

In accordance with an embodiment of the present invention, the method further provides that one or more proppants mixed with a proppant-transporting carrier fluid be injected into the formation to prop the fracture open, and in a further embodiment, the proppant is injected into the well bore before the pumps are shut down.

The density of the brine fracture fluid used in the method of the present invention is typically between about 1,200 to about 1,318 kg/m³ (about 10 to about 11 pounds per gallon) of solution, preferably between about 1,210 to about 1,306 kg/m³ (about 10. 1 to about 10.9 pounds per gallon), more preferably between about 1,210 to about 1,258 kg/m³ (about 10.1 to about 10. 5 pounds per gallon) still more preferably between about 1,210 to about 1,222 kg/m³ (about 10.1 to about 10.2 pounds per gallon) of solution, and even more preferably about 1,220 kg/m³ (about 10.18 pounds per gallon) of solution.

The composition of the brine fracture fluid used in the method of the present invention is preferably a mixture of magnesium and calcium chloride preferably in a ratio of about 10 to 1 to about 4 to 1. More preferably the brine fracture fluid is a mixture of magnesium and calcium chloride in a ratio of about 8 to 1, still more preferably about 6 to 1, and even more preferably about 5 to 1. The composition also must have sufficient sodium chloride or potassium chloride to suspend the clay and disperse it in solution. As stated above, the counterions or anions can comprise anions other than bromide or chloride. Most importantly, the brine fracture fluid must be deliquescent. That is, the composition will draw moisture out of the air continuously until it attains a liquid state. Examples of deliquescent salts are calcium chloride, magnesium chloride, potassium carbonate, trichloroacetic acid, calcium phosphate, nickel (II) chloride, potassium hydroxide, calcium nitrate, and sodium cyanide.

In an embodiment, a particular composition of the brine solution used in hydraulic fracture is shown in Table 2. It is understood by those of skill in the art that the brine solution shown in Table 2 can be combined with one or more additives and/or proppants commonly used in the art and discussed previously.

**TABLE 2**

| Mineral Content | Percentage by weight |
|---|---|
| Chloride | 22.27 |
| Bromide | 0.45 |
| Magnesium | 3.94 |
| Calcium | 0.76 |
| Sodium | 6.38 |
| Potassium | 0.30 |
| Manganese | 0.02 |
| Total salts | 34.12 |
| Water | 65.88 (remainder) |

In another embodiment of the present invention, the brine fracture fluid can be used in a two-step process where the first step comprises using a brine fracture fluid that contains only monovalent cations such as sodium or potassium, to disperse the clay. In the second step, a brine fracture fluid such as described above or in particular, the one described in Table 2, for example, having both monovalent and divalent cations, is then added to fracture zone. The brine fracture fluid of the second step may also include one or more additives.

In yet another embodiment of the present invention, the brine fracture fluid can be used in a three-step process where the first step comprises using a brine fracture fluid that contains only monovalent cations such as sodium or potassium, to disperse the clay. In the second step, a brine fracture fluid such as described above or in particular, the one described in Table 2, for example, having both monovalent and divalent cations, is then added to fracture zone. The fracture fluid of the second step may also include one or more additives. Then, the third step comprises injecting a proppant into the wellbore, wherein said proppant can be any type of proppants described above and known in the art. The proppant can be mixed with any of the transporting carrier fluids described herein or can be the brine fluids described herein or combinations thereof. In addition, the proppant transporting carriers can include one or more surfactants or additives.

In yet another embodiment of the present invention, the components of the brine fracture fluid are provided in dry form. For example, the chemical components which make up the brine fracture fluids used in the methods of the present invention, are in the dry form of the various salts used, e.g., sodium, potassium, magnesium, calcium, manganese and other mono or divalent cations, can be in the form of salts of, for example, chloride, bromide, fluoride, acetate, bisulfate, oxide, phosphate, nitrate and sulfate. The components are provided separately, as dry individual components, or as a dry mixture of one or more of the components. In a preferred embodiment, the components of the brine fracture fluids used in the methods of the present invention are provided as a dry mixture of the mono and divalent cations in the form of chloride and bromide salts. When needed, the dry individual components are added to water or another suitable fluid, in the proper proportions as described above, and used as a brine fracture fluid in the methods of the present invention. In another embodiment, the methods of the present invention further comprises that the mixture of monovalent and divalent cations are provided separately, as dry individual chemical components, or as a dry mixture of one or more of the components and added to water or another suitable fluid, prior to pumping the fracturing fluid down the wellbore. In a further embodiment, it is possible that some of the individual components of the brine fracture fluids used in the methods of the present invention are provided in aqueous solution, and then used in combination with a dry mixture of one or more of the remaining components, in the proper proportions as described above, and used as a brine fracture fluid in the methods of the present invention.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted.

Preferred embodiments of this invention are described herein, including the best mode known to the inventors for carrying out the invention.

## Claims

1. A method of fracturing a subterranean formation penetrated by a well bore, the method comprising
formulating a fracturing fluid comprising a brine solution having a deliquescent mixture of salts of monovalent and divalent cations, wherein the divalent cation salts comprise magnesium chloride and calcium chloride in a ratio by weight of magnesium chloride to calcium chloride of 10 to 1 to 4 to 1; and
pumping the fracturing fluid down the wellbore at a rate and pressure sufficient to initiate or extend a fracture in the formation.

2. The method of claim 1, wherein the brine solution comprises the following mineral composition ranges by weight percent:
chloride, 20-25; bromide, 0.3-0.55; magnesium, 3.0-5.0; calcium, 0.6-0.8; sodium, 5.0-7.0; potassium, 0.2-0.4; and manganese, 0.01-0.03; per 3.785 L (1 gallon) of solution.

3. The method of claims 1 or 2, wherein the brine solution comprises the following mineral composition by weight percent:
chloride, 22.27; bromide, 0.45; magnesium, 3.94; calcium, 0.76; sodium, 6.38; potassium, 0.30; and manganese, 0.02; per 3.785 L (1 gallon) of solution.

4. The method of any of claims 1 to 3, wherein the brine solution further comprises by weight percent, surfactant, 0.0001; per 3.785 L (1 gallon) of solution.

5. The method of any of claims 1 to 4, wherein the method further comprises that one or more proppants mixed with a proppant-transporting carrier fluid be injected into the formation to prop the fracture open.

6. The method of any of claims 1 to 5, wherein the method further comprises that the mixture of monovalent and divalent cations are provided separately, as dry individual chemical components, or as a dry mixture of one or more of the components and added to water or another suitable fluid, prior to pumping the fracturing fluid down the wellbore.

7. A method of fracturing a subterranean formation penetrated by a well bore, comprising:
obtaining a first fracturing fluid consisting of water and a mixture of monovalent cations;
pumping the first fracturing fluid down the wellbore at a rate and pressure sufficient to initiate or extend a fracture in the formation;
obtaining a second fracturing fluid comprising a brine solution having a mixture of salts of monovalent and divalent cations, wherein the divalent cation salts comprise magnesium chloride and calcium chloride in a ratio by weight of magnesium chloride to calcium chloride of 10 to 1 to 4 to 1; and
pumping the second fracturing fluid down the wellbore at a rate and pressure sufficient to initiate or extend a fracture in the formation.

8. The method of claim 7, wherein the first brine solution comprises the following mineral composition by weight percent:
chloride, 20-25; bromide, 0.3-0.55; sodium, 5.0-7.0; potassium, 0.2-0.4; per 3.785 L (1 gallon) of solution.

9. The method of either of claims 7 or 8, wherein the second brine solution comprises the following mineral composition by weight percent:
chloride, 20-25; bromide, 0.3-0.55; magnesium, 3.0-5.0; calcium, 0.6-0.8; sodium, 5.0-7.0; potassium, 0.2-0.4; manganese, 0.01-0.03; per 3.785 L (1 gallon) of solution.

10. The method of any of claims 7 to 9, wherein the second brine solution contains a surfactant, optionally said surfactant being a silicone based drilling fluid.

11. The method of any of claims 7 to 10, wherein the method further comprises that one or more proppants mixed with a proppant-transporting carrier fluid be injected into the formation to prop the fracture open.

12. The method of any of claims 7 to 11, wherein the method further comprises that the mixture of monovalent and divalent cations are provided separately, as dry individual chemical components, or as a dry mixture of one or more of the components and added to water or another suitable fluid, prior to pumping the fracturing fluid down the wellbore.

13. The method of any of claims 1 to 12, wherein the brine solution and the fracturing fluid, respectively, contain one or more additives selected from a gelling agent, crosslinking agent, gel breaker, surfactant, biocide, surface tension reducing agent, foaming agent, defoaming agent, demulsifier, non-emulsifier, scale inhibitor, gas hydrate inhibitor, polymer specific enzyme breaker, oxidative breaker, buffer, clay stabilizer, acid, solvent or a mixture thereof.

## Patentansprüche

1. Verfahren zum Frakturieren einer unterirdischen Formation, welche von einem Bohrloch durchdrungen ist, wobei das Verfahren umfasst:
Formulieren eines Frakturierungsfluids, welches eine Solelösung mit einer zerfließenden Mischung von Salzen von monovalenten und bivalenten Kationen umfasst, wobei die bivalenten Kationensalze Magnesiumchlorid und Calciumchlorid in einem Gewichtsverhältnis von Magnesiumchlorid zu Calciumchlorid von 10 zu 1 bis 4 zu 1 umfassen; und
Hinunterpumpen des Frakturierungsfluids in das Bohrloch mit einer Rate und einem Druck, die hinreichend sind, um einen Riss in der Formation einzuleiten oder zu erweitern.

2. Verfahren nach Anspruch 1, wobei die Solelösung die folgenden Bereiche an Mineralzusammensetzungen in Gewichtsprozent umfasst:
Chlorid: 20 bis 25; Bromid: 0,3 bis 0,55; Magnesium: 3,0 bis 5,0; Calcium: 0,6 bis 0,8; Natrium: 5,0 bis 7,0; Kalium: 0,2 bis 0,4 und Mangan: 0,01 bis 0,03; pro 3,785 I (pro Gallone) Lösung.

3. Verfahren nach Anspruch 1 oder 2, wobei die Solelösung die folgenden Mineralzusammensetzung in Gewichtsprozent umfasst:
Chlorid: 22,27; Bromid: 0,45; Magnesium: 3,94; Calcium: 0,76; Natrium: 6,38; Kalium: 0,30 und Mangan: 0,02; pro 3,785 I (pro Gallone) Lösung.

4. Verfahren nach einem der Ansprüche 1 bis 3, wobei die Solelösung ferner, in Gewichtsprozent, umfasst: ein oberflächenaktives Agens: 0,0001 pro 3,785 I (pro Gallone) Lösung.

5. Verfahren nach einem der Ansprüche 1 bis 4, wobei das Verfahren ferner umfasst, dass ein oder mehrere Stützmittel in Mischung mit einem Stützmittel-tragenden Trägerfluid in die Formation injiziert werden, um den Riss offen zu halten.

6. Verfahren nach einem der Ansprüche 1 bis 5, wobei das Verfahren ferner umfasst, dass die Mischung von monovalenten und bivalenten Kationen separat, als trockene individuelle chemische Komponenten, oder als eine trockene Mischung von einer oder mehreren der Komponenten bereitgestellt wird und Wasser oder einem anderen geeigneten Fluid zugesetzt wird, bevor das Frakturierungsfluid in das Bohrloch hinunter gepumpt wird.

7. Verfahren zur Frakturierung einer unterirdischen Formation, welche von einem Bohrloch durchdrungen ist, umfassend:
Erhalten eines ersten Frakurierungsfluids, welches aus Wasser und einer Mischung von monovalenten Kationen besteht;
Hinunterpumpen des ersten Frakturierungsfluids in das Bohrloch mit einer Rate und einem Druck, die hinreichend sind, um einen Riss in der Formation einzuleiten oder zu erweitern;
Erhalten eines zweiten Frakurierungsfluids, welches eine Solelösung mit einer Mischung von Salzen von monovalenten und bivalenten Kationen umfasst, wobei die bivalenten Kationensalze Magnesiumchlorid und Calciumchlorid in einem Gewichtsverhältnis von Magnesiumchlorid zu Calciumchlorid von 10 zu 1 bis 4 zu 1 umfassen; und
Hinunterpumpen des zweiten Frakturierungsfluids in das Bohrloch mit einer Rate und einem Druck, die hinreichend sind, um einen Riss in der Formation einzuleiten oder zu erweitern.

8. Verfahren nach Anspruch 7, wobei die erste Solelösung die folgende Mineralzusammensetzung in Gewichtsprozent umfasst:
Chlorid: 20 bis 25; Bromid: 0,3 bis 0,55; Natrium: 5,0 bis 7,0; Kalium: 0,2 bis 0,4; pro 3,785 I (pro Gallone) Lösung.

9. Verfahren nach einem der Ansprüche 7 oder 8, wobei die zweite Solelösung die folgende Mineralzusammensetzung in Gewichtsprozent umfasst:
Chlorid: 20 bis 25; Bromid: 0,3 bis 0,55; Magnesium: 3,0 bis 5,0; Calcium: 0,6 bis 0,8; Natrium: 5,0 bis 7,0; Kalium: 0,2 bis 0,4; Mangan: 0,01 bis 0,03; pro 3,785 I (pro Gallone) Lösung.

10. Verfahren nach einem der Ansprüche 7 bis 9, wobei die zweite Solelösung ein oberflächenaktives Agens umfasst, wobei gegebenenfalls das oberflächenaktive Agens ein Silicon-basiertes Bohrfluid ist.

11. Verfahren nach einem der Ansprüche 7 bis 10, wobei das Verfahren ferner umfasst, dass ein oder mehrere Stützmittel in Mischung mit einem Stützmittel-tragenden Trägerfluid in die Formation injiziert werden, um den Riss offen zu halten.

12. Verfahren nach einem der Ansprüche 7 bis 11, wobei das Verfahren ferner umfasst, dass die Mischung von monovalenten und bivalenten Kationen separat, als trockene individuelle chemische Komponenten, oder als eine trockene Mischung von einer oder mehreren der Komponenten bereitgestellt wird und Wasser oder einem anderen geeigneten Fluid zugesetzt wird, bevor das Frakturierungsfluid in das Bohrloch hinunter gepumpt wird.

13. Verfahren nach einem der Ansprüche 1 bis 12, wobei die Solelösung bzw. das Frakturierungsfluid ein oder mehrere Additive enthalten, welche ausgewählt sind aus einem Gelbildner, einem Vernetzungsmittel, einem Gelbrecher, einem oberflächenaktiven Agens, einem Biozid, einem die Oberflächenspannung vermindernden Mittel, einem Schäumer, einem Entschäumer, einem Demulgator, einem Emulsionsverhinderer, einem Ablagerungshemmer, einem Gashydrathemmer, einem polymerspezifischen Enzymbrecher, einem oxidativen Brecher, einem Puffer, einem Tonstabilisator, einer Säure, einem Lösemittel oder einer Mischung hiervon.

## Revendications

1. Procédé pour fracturer une formation souterraine pénétrée par un puits de forage, le procédé comprenant :
la formation d'une boue de fracturation comprenant une solution de saumure ayant un mélange déliquescent de sels de cations monovalents et divalents, parmi lesquels les sels de cations divalents comprennent du chlorure de magnésium et du chlorure de calcium en un rapport en poids du chlorure de magnésium au chlorure de calcium de 10 pour 1 à 4 pour 1 ; et
le pompage de la boue de fracturation dans le puits de forage à un débit et sous une pression suffisants pour initier ou étendre une fracture dans la formation.

2. Procédé selon la revendication 1, dans lequel la solution de saumure comprend les plages suivantes de composition de minéraux, en pourcentages en poids :
chlorure 20 à 25 ; bromure 0,3 à 0,55 ; magnésium 3,0 à 5,0 ; calcium 0,6 à 0,8 ; sodium 5,0 à 7,0 ; potassium 0,2 à 0,4 ; et manganèse 0,01 à 0,03 ; pour 3,785 litres (1 gallon) de solution.

3. Procédé selon la revendication 1 ou 2, dans lequel la solution de saumure comprend la composition suivante de minéraux, en pourcentages en poids :
chlorure 22,27 ; bromure 0,45 ; magnésium 3,94 ; calcium 0,76 ; sodium 6,38 ; potassium 0,30 ; et manganèse 0,02 ; pour 3,785 litres (1 gallon) de solution.

4. Procédé selon l'une quelconque des revendications 1 à 3, dans lequel la solution de saumure comprend en outre, en pourcentages en poids : tensioactif 0,0001 ; pour 3,785 litres (1 gallon) de solution.

5. Procédé selon l'une quelconque des revendications 1 à 4, lequel procédé comprend en outre le fait qu'un ou plusieurs agents de soutènement mélangés avec un véhicule fluide de transport d'agents de soutènement sont injectés dans la formation pour soutenir la fracture ouverte.

6. Procédé selon l'une quelconque des revendications 1 à 5, lequel procédé comprend en outre le fait que le mélange de cations monovalents et divalents est fourni séparément, sous la forme de composants chimiques individuels secs, ou sous la forme d'un mélange sec d'un ou plusieurs des composants et ajouté à de l'eau ou un autre fluide convenable, avant le pompage de la boue de fracturation dans le puits de forage.

7. Procédé pour fracturer une formation souterraine pénétrée par un puits de forage, comprenant :
l'obtention d'une première boue de fracturation constituée d'eau et d'un mélange de cations monovalents ;
le pompage de la première boue de fracturation dans le puits de forage à un débit et sous une pression suffisants pour initier ou étendre une fracture dans la formation ;
l'obtention d'une deuxième boue de fracturation comprenant une solution de saumure ayant un mélange de sels de cations monovalents et divalents, parmi lesquels les sels de cations divalents comprennent du chlorure de magnésium et du chlorure de calcium en un rapport en poids du chlorure de magnésium au chlorure de calcium de 10 pour 1 à 4 pour 1 ; et
le pompage de la deuxième boue de fracturation dans le puits de forage à un débit et sous une pression suffisants pour initier ou étendre une fracture dans la formation.

8. Procédé selon la revendication 7, dans lequel la première solution de saumure comprend la composition de minéraux suivante, en pourcentages en poids :
chlorure 20 à 25 ; bromure 0,3 à 0,55 ; sodium 5,0 à 7,0; potassium 0,2 à 0,4 ; pour 3,785 litres (1 gallon) de solution.

9. Procédé selon l'une ou l'autre des revendications 7 et 8, dans lequel la deuxième solution de saumure comprend la composition de minéraux suivante, en pourcentages en poids :
chlorure 20 à 25 ; bromure 0,3 à 0,55 ; magnésium 3,0 à 5,0 ; calcium 0,6 à 0,8 ; sodium 5,0 à 7,0 ; potassium 0,2 à 0,4 ; manganèse 0,01 à 0,03 ; pour 3,785 litres (1 gallon) de solution.

10. Procédé selon l'une quelconque des revendications 7 à 9, dans lequel la deuxième solution de saumure contient un tensioactif, ledit tensioactif étant éventuellement une boue de forage siliconée.

11. Procédé selon l'une quelconque des revendications 7 à 10, lequel procédé comprend en outre le fait qu'un ou plusieurs agents de soutènement mélangés avec un véhicule fluide de transport d'agents de soutènement sont injectés dans la formation pour soutenir la fracture ouverte.

12. Procédé selon l'une quelconque des revendications 7 à 11, lequel procédé comprend en outre le fait que le mélange de cations monovalents et divalents est fourni séparément, sous la forme de composants chimiques individuels secs, ou sous la forme d'un mélange sec d'un ou plusieurs des composants et ajouté à de l'eau ou un autre fluide convenable, avant le pompage de la boue de fracturation dans le puits de forage.

13. Procédé selon l'une quelconque des revendications 1 à 12, dans lequel la solution de saumure et la boue de fracturation, respectivement, contiennent un ou plusieurs additifs choisis parmi un agent gélifiant, un agent de réticulation, un réducteur de gel, un tensioactif, un biocide, un agent réduisant la tension de surface, un agent moussant, un agent anti-moussant, un désémulsionnant, un anti-émulsionnant, un inhibiteur de tartre, un inhibiteur d'hydrate gazeux, un agent dissociant les enzymes spécifiques d'un polymère, un agent dissociant par oxydation, un tampon, un stabilisant d'argile, un acide, un solvant ou un mélange de ceux-ci.
